# EUROPEAN PATENT SPECIFICATION

(11) **EP 2 136 551 B1**
(45) Date of publication and mention of the grant of the patent: **25.01.2012**
(21) Application number: 09007795.9
(22) Date of filing: 12.06.2009
(51) Int. Cl.: H04N 5/232, H04B 10/00

(54) **Omnidirectional imaging apparatus**
Omnidirektionale Bildgebungsvorrichtung
Appareil d'imagerie omnidirectionnelle

(30) Priority: 16.06.2008 JP 2008156953
(43) Date of publication of application: 23.12.2009
(73) Proprietor: FUJIFILM Corporation, Tokyo (JP)
(72) Inventor: Ge, Zongtao, Saitama-shi Saitama (JP); Mochitate, Seiji, Saitama-shi Saitama (JP)
(74) Representative: Klunker . Schmitt-Nilson . Hirsch

(56) References cited:
- EP-A- 0 149 286
- WO-A-2006/093948
- GB-A- 2 163 617
- JP-A- 2007 243 357
- US-A- 6 118 474
- US-A1- 2008 117 294
- US-B1- 7 176 960

## Description

### BACKGROUND OF THE INVENTION

### 1. Field of the Invention

The present invention relates to an omnidirectional imaging apparatus according to the preamble of claim 1. Such apparatus captures an omnidirectional image having subject information in all directions radially arranged therein and forms a panoramic image having subject information in all directions arranged in parallel therein on the basis of image data of the omnidirectional image.

### 2. Description of the Related Art

An omnidirectional imaging apparatus has been proposed which uses an imaging optical system to form an omnidirectional image on an imaging surface of an area sensor (a two-dimensional image sensor) and forms a panoramic image on the basis of image data of the omnidirectional image acquired by the area sensor (see JP-A-2003-308526, JP-A-2005-94713, JP-A-2008-28606, JP-A-2003-250070, and JP-T-2007-531333).

As the imaging optical system, a wide-angle lens (omnidirectional lens), such as a fisheye lens or a panoramic annular lens (PAL, see JP-T-2007-531333), or a curved mirror (omnidirectional mirror) having, for example, a spherical shape, a hyperboloidal shape, or a conic shape has been used in order to focus beams from a subject in all directions.

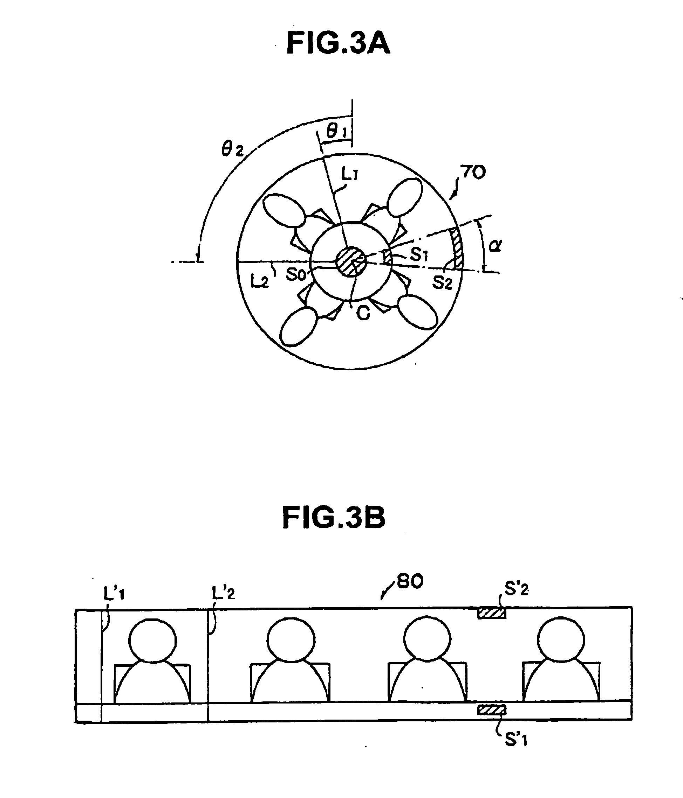

Figs. 3A and 3B are diagrams illustrating an example of the correspondence between an omnidirectional image and a panoramic image. Fig. 3A schematically shows an omnidirectional image having subject information of four persons who sit around a round table, which is obtained by an imaging optical system including a curved mirror that is provided on the round table such that its optical axis is parallel to the vertical direction and the curved mirror faces downward, and Fig. 3B schematically shows a panoramic image of the omnidirectional image.

In an omnidirectional image 70 shown in Fig. 3A, subject information in all directions is radially arranged in the diametric direction from the image center C of the omnidirectional image in an annular region (for example, the image of a lens arranged opposite to the omnidirectional mirror is arranged in a central region S₀) (for example, subject information items disposed at azimuth angles θ₁ and θ₂ are arranged on lines L₁ and L₂, respectively).

A panoramic image 80 shown in Fig. 3B is formed such that it has a rectangular shape, the longitudinal direction (which corresponds to the vertical direction of a real space) thereof corresponds to the diametric direction of the omnidirectional image, the lateral direction (which corresponds to the horizontal direction of a real space) thereof corresponds to the circumferential direction of the omnidirectional image, and subject information in all directions is arranged in parallel along the lateral direction (for example, subject information on the lines L₁ and L₂ respectively corresponding to the azimuth angles θ₁ and θ₂ in the omnidirectional image 70 is arranged on lines L₁' and L₂' corresponding to the azimuth angles θ₁ and θ₂ in the panoramic image 80).

When the panoramic image 80 is formed on the basis of the image data of the omnidirectional image 70, two image region S₁ and S₂ set in the omnidirectional image 70 are considered. The two image regions S₁ and S₂ have subject information arranged in the same azimuth angle range α. However, since the image region S₁ is closer to the image center C than the image region S₂, the length of the image region S₁ in an azimuthal direction (the circumferential direction of the omnidirectional image 70) is smaller than that of the image region S₂ in the omnidirectional image 70.

When the panoramic image 80 is formed on the basis of the image data of the omnidirectional image 70, image data in the two image regions S₁ and S₂ of the omnidirectional image 70 is converted into image data in two image regions S₁' and S₂' of the panoramic image 80. In the omnidirectional image 70, the length of the image region S₁ in the azimuthal direction (the circumferential direction of the omnidirectional image 70) is smaller than that of the image region S₂. However, in the panoramic image 80, the lengths of the two image regions S₁' and S₂' in the azimuthal direction (the lateral direction of the panoramic image 80) are equal to each other.

Therefore, when a general area sensor is used to acquire the image data of the omnidirectional image 70 and the panoramic image 80 is formed on the basis of the image data, the image quality (resolution) of the image region S₁' is lower than that of the image region S₂'. The reason is that, in a general area sensor in which light receiving elements are arranged with a uniform density, of two image regions S₁ and S₂ of the omnidirectional image 70, the image region S₁ having a small length in the azimuthal direction has a smaller number of corresponding light receiving elements per unit azimuth angle than the image region S₂. That is, assuming that one image data item is obtained by one light receiving element, when a general area sensor is used to capture the omnidirectional image 70, the amount of image data per unit azimuth angle in subject information within the same azimuth angle range greatly varies depending on the position of the image region in the diametric direction in the omnidirectional image 70. For example, in the two image regions S₁ and S₂, the image region S₁ disposed close to the image center C has a smaller amount of image data per unit azimuth angle than the image region S₂ disposed away from the image center C.

US 2008/0117294 A1 discloses an omnidirectional imaging apparatus according to the preamble of claim 1. The document does not describe details regarding the supply of power to the line sensor and the transmission of signals from the line sensor.

EP 0 149 286 A1 discloses a communication system having a central station and remote sensor stations. The remote stations are powered via laser light which is transmitted from the central station to the sensor stations, the light being converted into electrical power by means of solar cells. The light is transmitted via light pipes.

WO 2006/093948 discloses a system for transferring power between components which rotate relative to each other. A transmitter of a first part transmits light to a light receiver in a second part if the transmitting part and the receiving part approach each other.

JP 2007-243357 discloses a system for transferring information between components which rotate relative to each other. The transmission light path is along the central axis of rotation of the rotation shaft.

### SUMMARY OF THE INVENTION

The invention has been made in order to solve the above-mentioned problems, and an object of the invention is to provide an omnidirectional imaging apparatus capable of obtaining substantially the same amount of image data per unit azimuth angle in subject information within the same azimuth angle range, in the entire image region of an omnidirectional image, when acquiring image data of the omnidirectional image, and forming a high-quality panoramic image over the entire image region.

In order to achieve the above-mentioned object, an omnidirectional imaging apparatus according to the invention includes the features of claim 1

The imaging optical system may include a wide-angle lens that refracts beams incident in all directions and focuses the refracted beams. Alternatively, the imaging optical system may include a curved mirror that reflects beams incident in all directions and focuses the reflected beams.

The line sensor may have the predetermined rotation axis provided at the center thereof in a direction in which the light receiving element group is arranged.

In the above-mentioned aspect, the line sensor includes only one row of a plurality of light receiving elements (light receiving element group) arranged in a straight line. However, a line sensor including a plurality of rows of light receiving element groups arranged in straight lines in parallel to each other may be used.

The omnidirectional imaging apparatus according to the invention having the above-mentioned structure can obtain the following effects.

That is, the omnidirectional imaging apparatus according to the invention rotates the line sensor including a group of light receiving elements arranged in a direction orthogonal to a predetermined rotation axis to perform scanning, thereby sequentially acquiring image data of a formed omnidirectional image in all directions, and forms a panoramic image on the basis of the image data sequentially acquired in all directions.

It is possible to obtain substantially the same amount of image data per unit azimuth angle in subject information within the same azimuth angle range, regardless of the position of an image region in the omnidirectional image, by rotating the line sensor to perform scanning to sequentially acquire the image data of the omnidirectional image in all directions. Therefore, it is possible to form a high-quality panoramic image over the entire image region.

### BRIEF DESCRIPTION OF THE DRAWINGS

Fig. 1 is a diagram schematically illustrating the structure of an omnidirectional imaging apparatus according to a first embodiment of the invention;
Fig. 2 is a diagram schematically illustrating the structure of an omnidirectional imaging apparatus according to a second embodiment of the invention;
Figs. 3A and 3B are diagrams schematically illustrating the correspondence between an omnidirectional image (Fig. 3A) and a panoramic image (Fig. 3B);
Fig. 4 is a diagram schematically illustrating the structure of an imaging unit; and
Fig. 5 is a diagram illustrating another example of the setting of the rotating axis of a line sensor.

### DESCRIPTION OF THE PREFERRED EMBODIMENTS

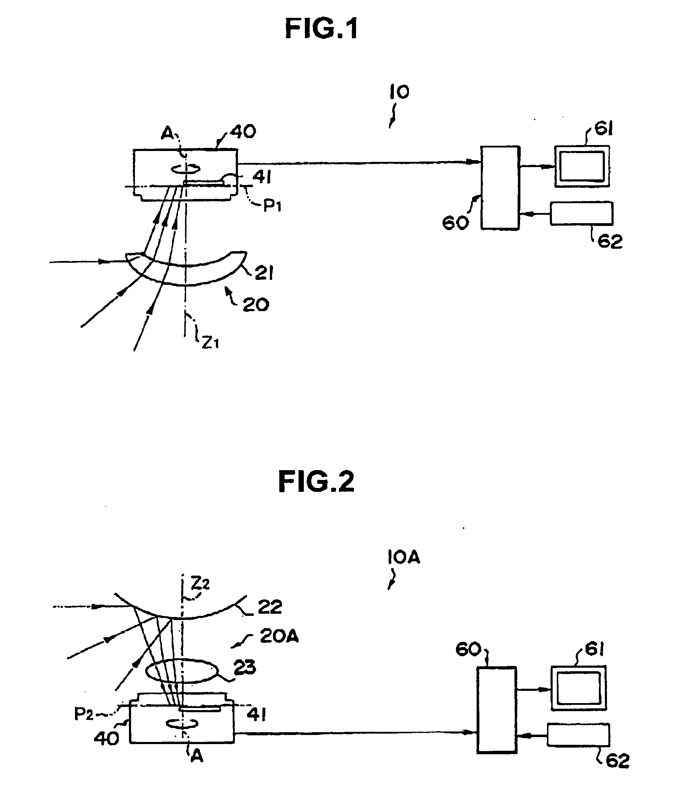

Hereinafter, exemplary embodiments of the invention will be described in detail with reference to the accompanying drawings. Fig. 1 is a diagram schematically illustrating the structure of an omnidirectional imaging apparatus according to a first embodiment of the invention.

An omnidirectional imaging apparatus 10 shown in Fig. 1 includes an imaging optical system 20 that forms an omnidirectional image having subject information radially arranged in all directions, an imaging unit 40 that acquires image data of the omnidirectional image formed by the imaging optical system 20, a panoramic image forming unit 60 that is composed of, for example, a computer and forms a panoramic image having subject information in all directions arranged in parallel to each other therein, on the basis of the image data of the omnidirectional image acquired by the imaging unit 40, a display device 61 that displays the image or the analysis result obtained by the panoramic image forming unit 60, and an input device 62 including, for example, a keyboard or a mouse.

The imaging optical system 20 includes a wide-angle lens 21, such as a fisheye lens or a panorama annular lens, that refracts and focuses beams incident in all directions, and forms an omnidirectional image on an imaging surface P₁ using the beams focused by the wide-angle lens 21.

The imaging unit 40 includes a line sensor 41 that includes a group of light receiving elements (not shown) arranged in a line in a direction that is orthogonal to a predetermined rotating axis A (which is aligned with an optical axis Z₁ of the imaging optical system 20) and can rotate about the rotating axis A to perform scanning. The imaging unit 40 sequentially acquires the image data of the omnidirectional image in all directions while rotating the line sensor 41 on the imaging surface P₁ to perform scanning.

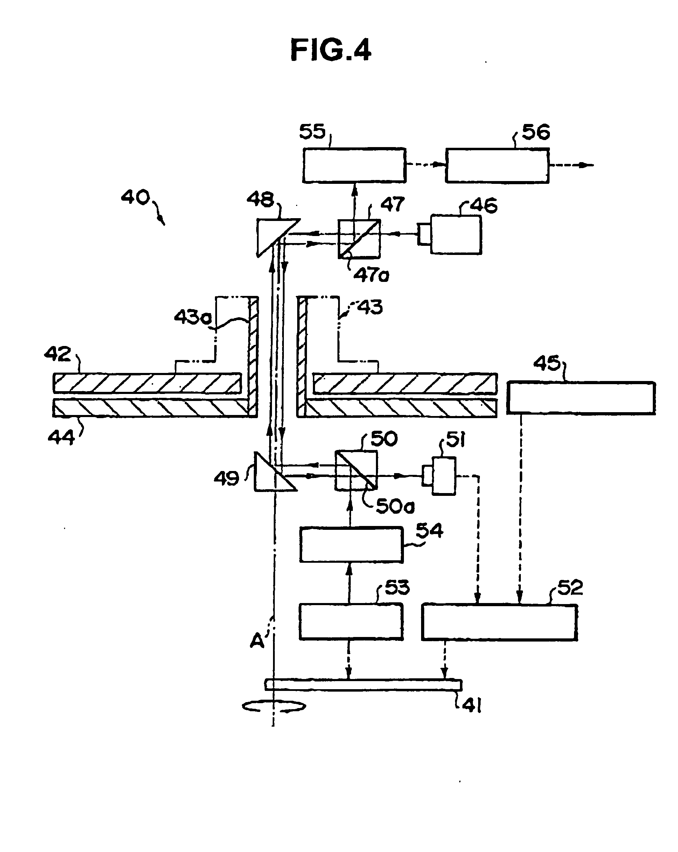

Next, the structure of the imaging unit 40 will be described in more detail with reference to Fig. 4. Fig. 4 is a diagram schematically illustrating the structure of the imaging unit 40. As shown in Fig. 4, the imaging unit 40 includes a fixed portion 42 that is fixed to a case (not shown), a driving motor 43 that is provided in the fixed portion 42, a rotating portion 44 that is fixed to a hollow rotating shaft 43a of the driving motor 43, and a rotation angle detecting unit 45 that is composed of, for example, a rotary encoder and detects the rotation angle of the rotating portion 44. The line sensor 41 is mounted to the rotating portion 44 through a mounting portion (not shown) so as to be rotated integrally with the rotating portion 44.

The imaging unit 40 uses light to perform the supply of power to the line sensor 41 and the transmission of output signals from the line sensor 41. That is, the imaging unit 40 includes a laser light source 46 for power supply that outputs light in a predetermined wavelength band (hereinafter, referred to as a 'first wavelength'), a dichroic prism 47, reflecting prisms 48 and 49, and a dichroic prism 50 that sequentially transmit light from the laser light source 46, and a photoelectric conversion power supply unit 51 that is composed of, for example, a solar cell, receives the transmitted light, and converts the received light into power. Power is supplied from the photoelectric conversion power supply unit 51 to the image sensor driving unit 52 such that the image sensor driving unit 52 drives the line sensor 41. The image sensor driving unit 52 drives the line sensor 41 to rotate at a predetermined angular interval on the basis of a detection signal transmitted from the rotation angle detecting unit 45 such that the line sensor 41 captures an image.

The imaging unit 40 further includes a signal processing unit 53 that processes output signals from the line sensor 41, an electro-optic conversion unit 54 that converts an electric signal output from the signal processing unit 53 into an optical signal in a wavelength band (hereinafter, referred to as a 'second wavelength') different from the first wavelength and outputs the optical signal, a photoelectric conversion unit 55 that receives the optical signal transmitted from the electro-optic conversion unit 54 through the dichroic prism 50, the reflecting prisms 49 and 48, and the dichroic prism 47, and converts the received optical signal into an electric signal, and a signal processing unit 56 that processes the electric signal from the photoelectric conversion unit 55 and outputs the processed signal as an image signal. The signal processing unit 53 and the electro-optic conversion unit 54 are also supplied with power from the photoelectric conversion power supply unit 51, but arrows indicating the supply of power are not shown in the drawings.

The dichroic prisms 47 and 50 include transmitting/reflecting surfaces 47a and 50a that transmit light with the first wavelength and reflect light with the second wavelength at a right angle. The laser light source 46, the dichroic prism 47, the reflecting prism 48, the photoelectric conversion unit 55, and the signal processing unit 56 are fixed to the fixed portion 42 (or the case (not shown)) by mounting portions (not shown), and the reflecting prism 49, the dichroic prism 50, the photoelectric conversion power supply unit 51, the image sensor driving unit 52, the signal processing unit 53, and the electro-optic conversion unit 54 are fixed to the rotating portion 44 by mounting portions (not shown), such that they are rotated together with the line sensor 41. The rotation angle detecting unit 45 includes a read unit and a unit to be read (not shown). One of the units is arranged on the fixed portion 42, and the other unit is arranged on the rotating portion 44.

Next, an omnidirectional imaging apparatus according to a second embodiment of the invention will be described with reference to Fig. 2. Fig. 2 is a diagram schematically illustrating the structure of the omnidirectional imaging apparatus according to the second embodiment of the invention. In Fig. 2, the same or similar components as those in the first embodiment are denoted by the same or similar reference numerals as those in Fig. 1 (alphabet A is added to the same reference numeral as that in Fig. 1).

The structure of an omnidirectional imaging apparatus 10A shown in Fig. 2 is basically similar to that of the omnidirectional imaging apparatus 10 except for the structure of an imaging optical system 20A and the arrangement direction of the imaging unit 40 (the imaging unit is arranged so as to face downward in Fig. 1, but it is arranged so as to face upward in Fig. 2).

The imaging optical system 20A includes a curved mirror 22 including a reflecting surface having a spherical shape, a hyperboloidal shape, or a conic shape and an imaging lens 23. The curved mirror 22 focuses beams in all directions, and the imaging lens 23 refracts the focused beams and further focuses them, thereby forming an omnidirectional image on an imaging surface P₂.

Next, the operation of the omnidirectional imaging apparatus 10A according to the second embodiment of the invention will be described with reference to Figs. 3A and 3B. Figs. 3A and 3B have been used to describe the problems of the related art. Fig. 3A schematically shows an omnidirectional image 70 having subject information of four persons who sit around a round table, which is formed on the imaging surface P₂ when the imaging optical system 20A of the omnidirectional imaging apparatus 10A is provided on the round table such that its optical axis Z₂ is parallel to the vertical direction and a curved mirror 22 faces downward, and Fig. 3B schematically shows a panoramic image 80 of the omnidirectional image.
(1) First, the imaging optical system 20A shown in Fig. 2 forms the omnidirectional image 70 on the imaging surface P₂.
(2) Then, the line sensor 41 scans the omnidirectional image 70 to sequentially acquire the image data of the omnidirectional image 70 in all directions while rotating at a predetermined angular interval on the imaging surface P₂. Then, the line sensor 41 outputs the image data to the panoramic image forming unit 60. For example, in the omnidirectional image 70, image data on lines L₁ and L₂ respectively corresponding to azimuth angles θ₁ and θ₂ is acquired when the line sensor 41 is disposed on the lines L₁ and L₂ and then output.
(3) Then, the panoramic image forming unit 60 forms the panoramic image 80 on the basis of the image data of the omnidirectional image 70 in all directions that is sequentially acquired by the line sensor 41. In order to form the panoramic image 80, basically, the image data of the omnidirectional image 70 acquired in all directions are rearranged in parallel along the horizontal direction of the panoramic image 80 (for example, the image data in each direction that is acquired from the lines L₁ and L₂ corresponding to the azimuth angles θ₁ and θ₂ in the omnidirectional image 70 is arranged on lines L₁' and L₂' corresponding to the azimuth angles θ₁ and θ₂ in the panoramic image 80).

As such, the omnidirectional imaging apparatus 10A acquires the image data of the omnidirectional image 70 in all directions using the line sensor 41. Therefore, the amount of image data per unit azimuth angle in subject information within the same azimuth angle range is substantially the same, regardless of the position of an image region in a diametric direction in the omnidirectional image 70. For example, the amounts of image data per unit azimuth angle acquired from two image regions S₁ and S₂ shown in Fig. 3A (having subject information in the same azimuth angle range α) are substantially equal to each other.

Therefore, it is possible to form a high-quality panoramic image 80 over the entire image region. For example, in the panoramic image 80, there is no difference in image quality between two image regions S₁' and S₂' respectively corresponding to the two image regions S₁ and S₂.

The operation of the omnidirectional imaging apparatus 10A is the same as that of the omnidirectional imaging apparatus 10 according to the first embodiment of the invention, and thus a detailed description thereof will be omitted. However, the omnidirectional image 70 shown in Fig. 3A is a mirror image formed by the curved mirror 21 of the imaging optical system 20A of the omnidirectional imaging apparatus 10A, which is different from that formed by the imaging optical system 20 of the omnidirectional imaging apparatus 10.

Although the exemplary embodiments of the invention have been described in detail above, the invention is not limited thereto. Various modifications and changes of the invention can be made.

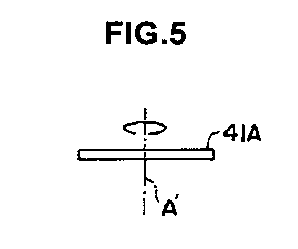

For example, in the above-described embodiments, the rotating axis A of the line sensor 41 is set at one end of the line sensor 41. However, as in a line sensor 41A shown in Fig. 5, a rotating axis A' may be set at the center of the line sensor 41A in the length direction (at the center in the direction in which the light receiving element group is arranged). In this case, it is possible to acquire image data of the entire region of an omnidirectional image by rotating the line sensor 41A by 180 degrees to perform scanning.

In the above-described embodiments, light is used to perform both the supply of power to the line sensor and the transmission of signals from the line sensor. However, the supply of power and the transmission of signals may be performed by a wireless system. In addition, a wireless system may be used for the supply of power to the line sensor, and light may be used for the transmission of signals from the line sensor. Conversely, light may be used for the supply of power to the line sensor, and the wireless system may be used for the transmission of signals from the line sensor. Further, the supply of power to the line sensor or the transmission of signals from the line sensor may be performed by electromagnetic induction using an electromagnetic coil. When both the supply of power to the line sensor and the transmission of signals from the line sensor are performed by the wireless system, the structure of the imaging unit may be the same as that disclosed in Japanese Patent Application No. 2008-74611 applied by the applicant of the invention.

In the above-described embodiments, the line sensor 41 includes a group of light receiving elements arranged in a line. However, a line sensor (not shown) including a plurality of rows of light receiving element groups arranged in straight lines in parallel to each other may be used.

## Claims

1. An omnidirectional imaging apparatus comprising:
an imaging optical system (20,204) that forms an omnidirectional image having subject information in all directions radially arranged therein;
an imaging unit (40) that acquires image data of the omnidirectional image formed by the imaging optical system; and
a panoramic image forming unit (60) that forms a panoramic image having the subject information in all directions arranged in parallel therein, on the basis of the image data of the omnidirectional image acquired by the imaging unit (40),
wherein the imaging unit (40) includes a line sensor (41) that has a group of light receiving elements arranged in a direction orthogonal to a predetermined rotation axis and can rotate about the predetermined rotation axis (Z₁;Z₂) to perform scanning,
the imaging unit (40) rotates the line sensor (41) to perform scanning, thereby sequentially acquiring the image data of the omnidirectional image in all directions, and
the panoramic image forming unit (60) forms The panoramic image on the basis of the image data of the omnidirectional image that is sequentially acquired in all
directions by the imaging unit,
**characterised in that**
the imaging unit (40) includes:
a rotation shaft (43a) that is driven by a motor (43) and has a hollow portion in which a light path is formed;
a rotating portion (44) that is fixed to one end side of the rotation shaft (43);
a fixed portion (42) that is supported by a fixing portion disposed on the other end side of the rotation shaft (43a) and supports the motor (43);
the rotating portion supports:
a line sensor (41) that has a group of light receiving elements arranged in a direction orthogonal to a rotation axis of the rotation shaft and rotates about the rotation axis to perform scanning by a rotation of the rotation shaft (43a);
an electro-optic conversion unit (54) that converts image data read by the line sensor into a light signal having a first wavelength and outputs the light signal;
a first dichroic prism (50) that divides the light signal from light for power having a second wavelength which is different from the first wavelength by reflection and transmission, the first dichroic prism (50) having wavelength-selectivity;
a first reflecting prism (49) that leads the light signal divided by the first dichroic prism (50) into a first light path and leads the light for power from a second light path into the first dichroic prism (50), the first light path being a path on a central axis of rotation of the rotation shaft from one end of the rotation shaft to the other end of the rotation shaft, the second light path being a path on the central axis from the other end of the rotation shaft (43a) to the one end of the rotation shaft (43a);
a photoelectric conversion power supply unit (51) that receives the light for power divided by the first dichroic prism to convert the light for power into power and supplies power to the line sensor (41) and the electro-optic conversion unit (54); and
the fixed portion of the imaging unit includes:
a laser light source (46) that outputs the light for power having the second wavelength;
a second dichroic prism (47) that divides the light signal having the first wavelength from the light for power by reflection and transmission, the second dichroic prism (47) having wavelength-selectivity;
a second reflecting prism (48) that leads the light for power divided by the second dichroic prism (47) into the second light path and leads the light signal from the first light path into the second dichroic prism (47);
a photoelectric conversion unit (55) that receives the light signal divided by the second dichroic prism (47) and converts the light signal into the omnidirectional image.

2. The omnidirectional imaging apparatus according to claim 1,
wherein the imaging optical system (20) includes a wide-angle lens (21) that refracts beams incident in all directions and focuses the refracted beams.

3. The omnidirectional imaging apparatus according to claim 1,
wherein the imaging optical system (20A) includes a curved mirror (22) that reflects beams incident in all directions and focuses the reflected beams.

4. The omnidirectional imaging apparatus according to any one of claims 1 to 3,
wherein the line sensor (41) has the predetermined rotation axis (A) provided at the center thereof in a direction in which the light receiving element group is arranged.

## Patentansprüche

1. Omnidirektionale Bildgebungsvorrichtung, umfassend:
eine Bildaufnahmeoptik (20, 20A), die ein omnidirektionales Bild mit Objektinformation in allen darin angeordneten radialen Richtungen erzeugt;
eine Bildgebungseinheit (4), die Bilddaten des von der Abbildungsoptik erzeugten omnidirektionalen Bildes umfasst; und
eine Panoramabild-Erzeugungseinheit (6), die ein Panoramabild mit der Objektinformation in sämtlichen Richtungen in paralleler Anordnung erzeugt auf der Grundlage der von der Bildgebungseinheit (4) erfassten Bilddaten des omnidirektionalen Bildes,
wobei die Bildgebungseinheit (4) einen Zeilensensor (41) enthält, der eine Gruppe von Lichtempfangselementen besitzt, die in eine Richtung orthogonal zu einer vorbestimmten Drehachse angeordnet sind und um die vorbestimmte Drehachse (Z1; Z2) zum Ausführen einer Abtastung drehen können,
wobei die Bildgebungseinheit (40) den Zeilensensor (41) dreht, um eine Abtastung durchzuführen und **dadurch** sequentiell die Bilddaten des omnidirektionalen Bildes in allen Richtungen zu erfassen, und
die Panoramabild-Erzeugungseinheit (60) das Panoramabild auf der Grundlage der sequentiell in sämtlichen Richtungen durch die Bildgebungseinheit erfassten Bilddaten des omnidirektionalen Bildes erzeugt,
**dadurch gekennzeichnet, dass** die Bildgebungseinheit (40) enthält:
eine Drehwelle (43a), die von einem Motor (43) angetrieben wird und einen hohlen Abschnitt aufweist, in welchem ein Lichtweg gebildet ist;
einen Drehabschnitt (44), der an einer Seite der Drehwelle (43) befestigt ist;
einen festen Abschnitt (42), der von einem festen Abschnitt am anderen Ende der Drehwelle (43) gehalten wird und den Motor (43) stützt;
dass der Drehabschnitt trägt:
einen Zeilensensor (41), der eine Gruppe von Lichtempfangselementen enthält, die in eine Richtung orthogonal zu einer Drehachse angeordnet sind, und der sich durch eine Drehung der Drehwelle (43a) zum Ausführen einer Abtastung um die Drehachse dreht;
eine elektrooptische Wandlereinheit (50), die von dem Zeilensensor gelesene Bilddaten umwandelt in ein Lichtsignal einer ersten Wellenlänge und das Lichtsignal ausgibt;
ein erstes dicroitisches Prisma (50), welches das Lichtsignal abtrennt vom Leistungszufuhrlicht mit einer zweiten, von der ersten Wellenlänge verschiedenen Wellenlänge, durch Reflexion und Transmission, wobei das erste dicroitische Prisma (50) Wellenlängen-Selektivität besitzt;
ein erstes reflektierendes Prisma (49), welches das von dem ersten dicroitischen Prisma (50) abgeteilte Lichtsignal in einen ersten Lichtweg einleitet und das zur Leistungszufuhr dienende Licht aus einem zweiten Lichtweg in das erste dicroitische Prisma (50) leitet, wobei der erste Lichtweg einen Weg auf einer Mitte-Drehachse der Drehwelle von einem Ende der Drehwelle zu deren anderen Ende ist, der zweite Lichtweg ein Weg auf der Mittelachse von dem anderen Ende der Drehwelle (43a) zu deren einem Ende ist;
eine photoelektrische Wandler-Leistungszufuhreinheit (51), die das zur Leistungszufuhr dienende, von dem ersten dicroitischen Prisma abgeteilte Licht empfängt, um das der Leistungszufuhr dienende Licht umzuwandeln in Leistung, und diese Leistung dem Zeilensensor (41) und der elektrooptischen Wandlereinheit (54) zuführt; und
dass der feste Abschnitt der Bildgebungseinheit enthält:
eine Laserlichtquelle (46), die das zur Leistungszufuhr dienende Licht mit der zweiten Wellenlänge ausgibt;
ein zweites dicroitisches Prisma (47), welches das Lichtsignal mit der ersten Wellenlänge von dem der Leistungszufuhr dienenden Licht durch Reflexion und Transmission abtrennt, wobei das zweite dicroitische Prisma Wellenlängenselektivität besitzt;
ein zweites reflektierendes Prisma (48), welches das zur Leistungszufuhr dienende, von dem zweiten dicroitischen Prisma (47) abgetrennte Licht in den zweiten Lichtweg leitet und das Lichtsignal aus dem ersten Lichtweg in das zweite dicroitische Prisma (47) leitet;
eine photoelektrische Wandlereinheit (55), die das von dem zweiten dicroitischen Prisma (47) abgeteilte Lichtsignal empfängt und das Lichtsignal in das omnidirektionale Bild umwandelt.

2. Omnidirektionale Bildgebungsvorrichtung nach Anspruch 1, bei der die Abbildungsoptik (20) ein Weitwinkelobjektiv (21) enthält, welches in sämtliche Richtungen einfallende Strahlen bricht und die gebrochenen Strahlen fokussiert.

3. Omnidirektionale Bildgebungsvorrichtung nach Anspruch 1, bei der die Abbildungsoptik (20A) einen gekrümmten Spiegel (22) enthält, der in sämtliche Richtungen einfallende Strahlen reflektiert und die reflektierten Strahlen fokussiert.

4. Omnidirektionale Bildgebungsvorrichtung nach einem der Ansprüche 1 bis 3, bei der der Zeilensensor (41) eine vorbestimmte Drehachse (A) aufweist, die in seiner Mitte in einer Richtung vorgesehen ist, in der die Gruppe von Lichtempfangselementen angeordnet ist.

## Revendications

1. Appareil d'imagerie omnidirectionnelle comprenant :
un système optique d'imagerie (20, 20A), lequel forme une image omnidirectionnelle présentant des informations de sujet dans toutes les directions agencées de manière radiale dans celle-ci ;
une unité de d'imagerie (40) qui capture des données d'image de l'image omnidirectionnelle formée par le système optique d'imagerie, et
une unité de formation d'image panoramique (60) qui forme une image panoramique présentant les informations de sujet dans toutes les directions agencées en parallèle dans celle-ci, sur la base des données d'image de l'image omnidirectionnelle capturée par l'unité d'imagerie (40) ;
dans lequel l'unité d'imagerie (40) inclut un capteur de ligne (41) qui présente un groupe d'éléments de réception optique agencés dans une direction orthogonale à un axe de rotation prédéterminé et qui peut tourner autour de l'axe de rotation prédéterminé (Z₁ ; Z₂) afin de réaliser un balayage ;
l'unité d'imagerie (40) fait tourner le capteur de ligne (41) afin de réaliser un balayage, capturant de ce fait de manière séquentielle les données d'image de l'image omnidirectionnelle dans toutes les directions, et
l'unité de formation d'image panoramique (60) forme l'image panoramique sur la base des données d'image de l'image omnidirectionnelle qui est capturée de manière séquentielle dans toutes les directions par l'unité d'imagerie,
**caractérisé en ce que** :
l'unité d'imagerie (40) inclut :
un arbre de rotation (43 a) entraîné par un moteur (43) et présentant une partie creuse dans laquelle un trajet optique est formé ;
une partie rotative (44) fixée sur un côté d'extrémité de l'arbre de rotation (43) ;
une partie fixe (42) supportée par une partie de fixation disposée sur l'autre côté d'extrémité de l'arbre de rotation (43a) et supportant le moteur (43) ;
la partie rotative supporte :
un capteur de ligne (41) qui présente un groupe d'éléments de réception optique agencés dans une direction orthogonale à un axe de rotation de l'arbre de rotation et qui tourne autour de l'axe de rotation afin de réaliser un balayage par une rotation de l'arbre de rotation (43 a) ;
une unité de conversion électro-optique (54) qui convertit les données d'image lues par le capteur de ligne en un signal optique présentant une première longueur d'onde et qui émet le signal optique ;
un premier prisme dichroïque (50) qui divise le signal optique à partir de la lumière destinée à l'alimentation électrique présentant une seconde longueur d'onde, laquelle est différente de la première longueur d'onde, par réflexion et transmission, le premier prisme dichroïque (50) présentant une sélectivité de longueur d'onde ;
un premier prisme de réflexion (49) qui conduit le signal optique divisé par le premier prisme dichroïque (50) en un premier trajet optique et conduit la lumière destinée à l'alimentation électrique d'un second trajet optique jusque dans le premier prisme dichroïque (50), le premier trajet optique étant un trajet sur un axe central de rotation de l'arbre de rotation allant d'une première extrémité de l'arbre de rotation à l'autre extrémité de l'arbre de rotation, le second trajet optique étant un trajet sur l'axe central allant de l'autre extrémité de l'arbre de rotation (43a) à la première extrémité de l'arbre de rotation (43a) ;
une unité d'alimentation électrique de conversion photoélectrique (51) qui reçoit la lumière destinée à l'alimentation électrique divisée par le premier prisme dichroïque afin de convertir la lumière destinée à l'alimentation électrique en alimentation électrique et qui fournit l'alimentation électrique au capteur de ligne (41) et à l'unité de conversion électro-optique (54), et
la partie fixe de l'unité d'imagerie inclut :
une source de lumière laser (46) qui émet la lumière destinée à l'alimentation électrique présentant la seconde longueur d'onde ;
un second prisme dichroïque (47) qui divise le signal optique, présentant la première longueur d'onde, de la lumière destinée à l'alimentation électrique par réflexion et transmission, le second prisme dichroïque (47) présentant une sélectivité de longueur d'onde ;
un second prisme de réflexion (48) qui conduit la lumière destinée à l'alimentation électrique divisée par le second prisme dichroïque (47) jusque dans le second trajet optique, et conduit le signal optique du premier trajet optique jusque dans le second prisme dichroïque (47), et
une unité de conversion photoélectrique (55) qui reçoit le signal optique divisé par le second prisme dichroïque (47) et qui convertit le signal optique en l'image omnidirectionnelle.

2. Appareil d'imagerie omnidirectionnelle selon la revendication 1, dans lequel le système optique de formation d'image (20) inclut un objectif grand-angle (21) qui réfracte des faisceaux incidents dans toutes les directions et fait la mise au point des faisceaux réfractés.

3. Appareil d'imagerie omnidirectionnelle selon la revendication 1, dans lequel le système optique de formation d'image (20A) inclut un miroir courbe (22) qui réfracte des faisceaux incidents dans toutes les directions et fait la mise en point des faisceaux réfléchis.

4. Appareil d'imagerie omnidirectionnelle selon l'une quelconque des revendications 1 à 3, dans lequel le capteur de ligne (41) présente l'axe de rotation prédéterminé (A) prévu au niveau de son centre dans une direction dans laquelle est agencé le groupe d'éléments de réception optique.
